(19) Europäisches Patentamt
European Patent Office
Office européen des brevets

(11) Veröffentlichungsnummer: **0 225 537 B1**

(12) # EUROPÄISCHE PATENTSCHRIFT

(45) Veröffentlichungstag der Patentschrift: **27.03.91**

(51) Int. Cl.$^5$: **C08G 73/16**, C08J 5/18, C08G 63/68

(21) Anmeldenummer: **86116271.7**

(22) Anmeldetag: **24.11.86**

(54) **Vollaromatische mesomorphe Polyesterimide, deren Herstellung sowie Verwendung.**

(30) Priorität: **04.12.85 DE 3542797**

(43) Veröffentlichungstag der Anmeldung:
**16.06.87 Patentblatt 87/25**

(45) Bekanntmachung des Hinweises auf die Patenterteilung:
**27.03.91 Patentblatt 91/13**

(84) Benannte Vertragsstaaten:
**AT BE CH DE FR GB IT LI LU NL SE**

(56) Entgegenhaltungen:
**EP-A- 0 084 256**
**EP-A- 0 161 413**
**DE-A- 1 795 826**
**US-A- 4 536 562**

**PATENT ABSTRACTS OF JAPAN, Band 9, Nr. 287 (C-314)[2010], 14. November 1985; & JP - A - 60 133 024 (IDEMITSU KOSAN K.K.) 16.07.85**

(73) Patentinhaber: **BASF Aktiengesellschaft**
**Carl-Bosch-Strasse 38**
**W-6700 Ludwigshafen(DE)**

(72) Erfinder: **Hisgen, Bernd, Dr.**
**Goethestrasse 6**
**W-6703 Limburgerhof(DE)**
Erfinder: **Kock, Hans-Jakob, Dr.**
**Bismarckstrasse 85**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind vollaromatische mesomorphe Polyesterimide, die unterhalb 320 °C eine flüssigkristalline fadenbildende Schmelze bilden.

Es sind schon eine Reihe von flüssigkristallinen Polyesterimiden bekannt. Solche Polymere sind jedoch hinsichtlich ihrer Wärmeformbeständigkeit, ihrer Verarbeitbarkeit und insbesondere ihrer geringen Abriebfestigkeit verbesserungsbedürftig. In der US-PS 4 176 223 werden Polyesterimide beschrieben, die aus Naphthalindicarbonsäure, substituierten Hydrochinonen sowie 4-(4'-Carboxyphthalimido)benzoesäure aufgebaut sind. Solche Polymere erfordern jedoch für ihre Verarbeitung aus der Schmelze Temperaturen von 330 °C und mehr. Das gleiche gilt für die aus der US-PS 4 383 105 bekannten Polyesterimide, die aus Hydroxynaphthalincarbonsäure, Terephthalsäure, p-Hydroxybenzoesäure sowie 4-(4'-Hydroxyphthalimido)-phenol aufgebaut sind. In der JP-A-60 133 024 werden Polyesterimide beschrieben, die aus ousschließlich pera-verknüpften aromatischen Einheiten aufgebaut sind. Diese sind ebenfalls nur bei relativ hohen Temperaturen verarbeitbar.

Es wär deshalb die technische Aufgabe gestellt, vollaromatische mesomorphe Polyesterimide zur Verfügung zu stellen, die unterhalb 300 °C eine flüssigkristalline fadenbildende Schmelze bilden und sich somit leichter verarbeiten lassen und darüber hinaus eine hohe Wärmeformbeständigkeit und eine gute Abriebfestigkeit aufweisen.

Diese Aufgabe wird gelöst durch vollaromatische mesomorphe Polyesterimide, die unterhalb 320 °C eine flüssigkristalline fadenbildende Schmelze bilden, aufgebaut aus

a) 5 bis 35 Mol-% wiederkehrenden Einheiten der Formeln I und/oder II

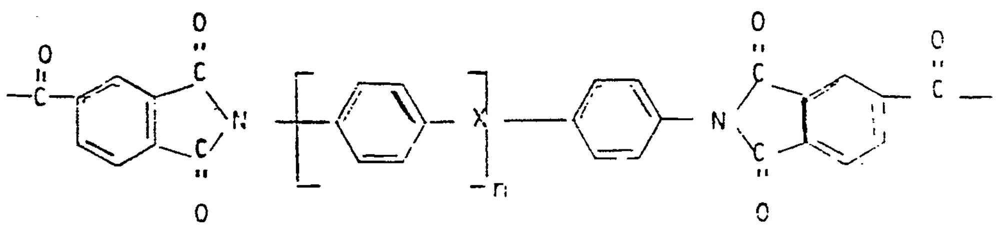

I

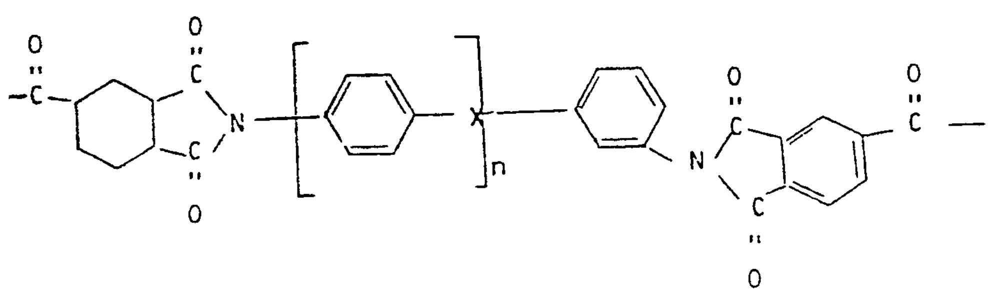

II,

In denen X gleich oder verschieden sein kann und jeweils -O-, -S-, $-SO_2-$, -CO-, $-CH_2-$, $=C(CH_3)_2$ bedeutet und n für O oder 1 steht.

b) O bis 3O Mol-% wiederkehrenden Einheiten der Formeln III und/oder IV

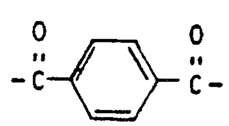

III

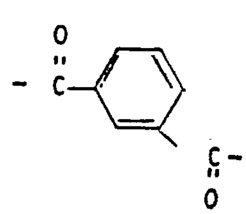

IV

c) einer Summe aus a) und b) entsprechenden molaren Menge an wiederkehrenden Einheiten
c1) 3 bis 35 Mol-% Einheiten der Formel V

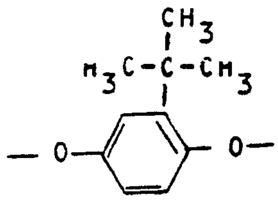

(V)

sowie mindestens eine der wiederkehrenden Einheiten der Formeln VI, VII und VIII
c2) 2 bis 25 Mol-% Einheiten der Formel

(VI)

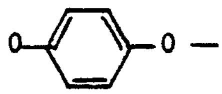

c3) O bis 25 Mol-% Einheiten der Formel

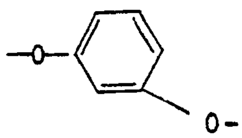

(VII)

c4) 2 bis 25 Mol-% Einheiten der Formel

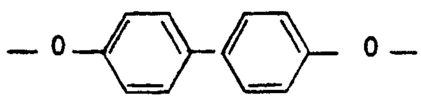

(VIII)

wobei die Summe der molaren Anteile der Komponenten c1) bis c4) jeweils der Summe der Mol-% der Komponenten a) und b) entspricht.
d) gegebenenfalls 5 bis 25 Mol-% wiederkehrenden Einheiten der Formel IX

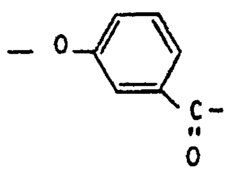

(IX)

sowie
e) wiederkehrenden Einheiten der Formel X

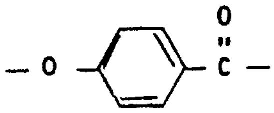

(X),

wobei die Summe der molaren Anteile von a), b) c) d) und e) jeweils 100 Mol-% ergibt.

Die neuen vollaromatischen Polyesterimide haben den Vorteil, eine hohe Wärmeformbeständigkeit mit einer glatten abriebfesten Oberfläche zu verbinden. Weiterhin zeichnen sich die neuen Polyesterimide durch hohe Steifigkeit, Festigkeit und Zähigkeit aus. Zudem sind die neuen Polyesterimide weitgehend

chemikalienbeständig und schwer brennbar.

Der flüssigkristalline Zustand der Polyesterimide kann mit dem Polarisationsmikroskop nach einer in der DE-AS 25 20 819 beschriebenen Methode nachgewiesen werden. Zwischen gekreuzten Polarisatoren weisen die Polymerschmelzen, die in einer Schichtdicke von 10µm zwischen Glasplatten aufgetragen sind, Texturen auf, die einer mesomorphen Phase zugeordnet werden können.

Die erfindungsgemäßen Polyesterimide sind aufgebaut aus:

a) 5 bis 35 Mol-%, insbesondere 7 bis 25 Mol-%, wiederkehrenden Einheiten der Formeln I und/oder II

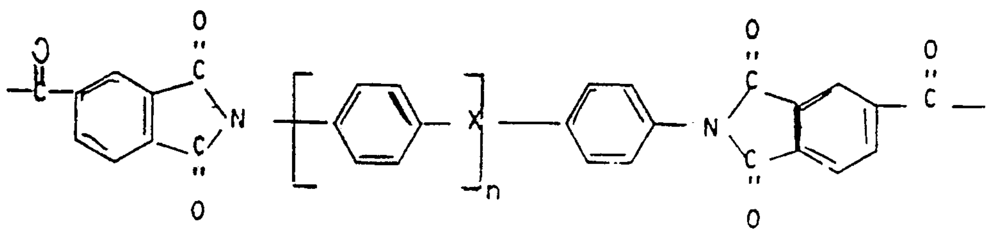

I

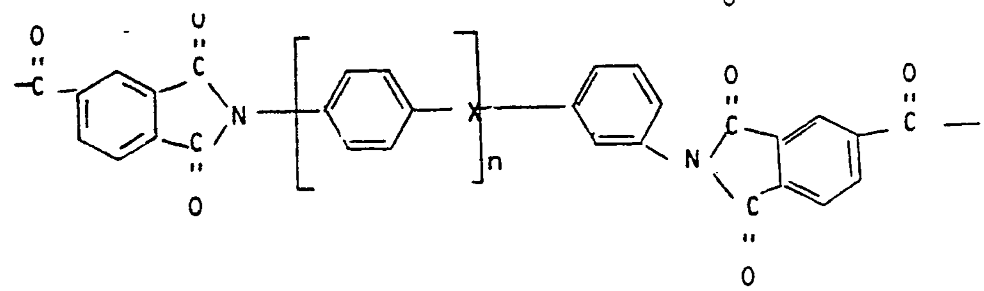

II,

in denen x gleich oder verschieden sein kann und x jeweils -O-, -S-, $-SO_2$, -CO-, $-CH_2$, $=C(CH_3)_2$ bedeutet und n für 0 oder 1 steht.

Geeignete Ausgangsverbindungen sind beispielsweise
4,4′-Bis-[(4-carboxy)-N-phthalimido]diphenylether,
4,4′-Bis-[(4-carboxy)-N-phthalimido]diphenylmethan,
4,4′-Bis-[(4-carboxy)-N-phthalimido]diphenylsulfon,
4,4′-Bis-[(4-carboxy)-N-phthalimido]diphenylsulfid,
4,4′-Bis-[(4-carboxy)-N-phthalimido]diphenylketon,
3,4′-Bis-[(4-carboxy)-N-phthalimido]diphenylether,
3,4′-Bis-[(4-carboxy)-N-phthalimido]diphenylsulfid,
3,4′-Bis-[(4-carboxy)-N-phthalimido]diphenylsulfon,
3,4′-Bis-[(4-carboxy)-N-phthalimido]diphenylketon,
3,4′-Bis-[(4-carboxy)-N-phthalimido]diphenylmethan.

Die Herstellung solcher Ausgangsverbindungen wird beispielsweise beschrieben in J. Polym. Sci. (A-1), 7 , 321-332 (1969)

b) 0 bis 30 Mol-%, insbesondere 0 bis 20 Mol-% wiederkehrende Einheiten der Formel III und/oder IV

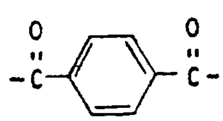 (III) u. (IV) 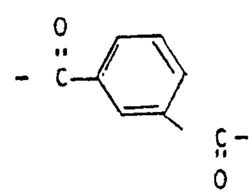

Geeignete Ausgangsverbindungen sind beispielsweise Terephthalsäure und Isophthalsäure.

c) Einer der Summe aus den Komponente a) und b) entsprechenden molaren Menge an aromatischen Dihydroxyverbindungen, nämlich

c1) 3 bis 35 Mol-% wiederkehrenden Einheiten der Formel V

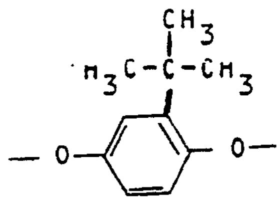

(V)

als geeignete Ausgangsverbindungen wird tert.-Butylhydrochinon verwendet sowie mindestens eine der wiederkehrenden Einheiten.
c2) 2 bis 25 Mol-%

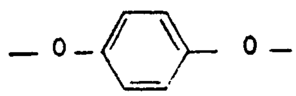

(VI)

eine geeignete Ausgangsverbindung ist beispielsweise Hydrochinon.
c3) O bis 25 Mol-%

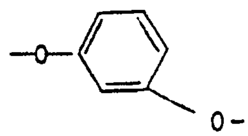

(VII)

eine bevorzugte Ausgangsverbindung ist beispielsweise Resorcin.
c4) 2 bis 25 Mol-%

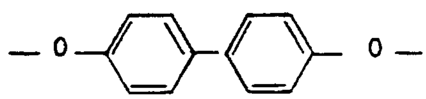

(VIII)

eine geeignete Ausgangsverbindung ist beispielsweise 4,4'-Dihydroxybiphenyl.

Es versteht sich, daß die Summe der molaren Anteile der Komponenten c1) bis c4) jeweils der Summe der Mol-% der Komponenten a) und b) entspricht.

d) Gegebenenfalls 5 bis 25 Mol-%, insbesondere 5 bis 20 Mol-% wiederkehrenden Einheiten der Formel IX

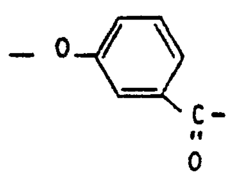

(IX)

eine geeignete Ausgangsverbindung ist beispielsweise m-Hydroxybenzoesäure.

e) Wiederkehrende Einheiten der Formel X, vorteilhaft in einer Mindestmenge von 10 Mol-%.,

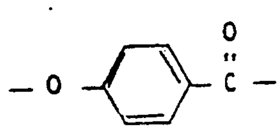

(X)

Eine geeignete Ausgangsverbindung ist beispielsweise p-Hydroxybenzoesäure.

Es versteht sich, daß die Summe der molaren Anteile der Komponenten a), b), c), d) und e) jeweils 100 Mol-% ergibt.

Vorteilhafte Polyesterimide enthalten als Komponente c) 5 bis 25 Mol-% wiederkehrende Einheiten der Formel V sowie mindestens eine der wiederkehrenden Einheiten, nämlich 5 bis 20 Mol-% wiederkehrenden Einheiten der Formel VI, 5 bis 20 Mol-% wiederkehrenden Einheiten der Formel VII und 5 bis 20 Mol-% wiederkehrenden Einheiten der Formel VIII.

Bevorzugte Polyesterimide enthalten als Komponente c) 10 bis 20 Mol-% wiederkehrende Einheiten der Formel V, 8 bis 18 Mol-% wiederkehrende Einheiten der Formel VI und 5 bis 16 Mol-% wiederkehrende Einheiten der Formel VIII.

Andere bevorzugte Polyesterimide enthalten als Komponente c) 10 bis 20 Mol-% wiederkehrende Einheiten der Formel V, 8 bis 18 Mol-% wiederkehrenden Einheiten der Formel VI und 5 bis 15 Mol-% wiederkehrende Einheiten der Formel VII.

Bevorzugte vollaromatische Polyesterimide haben eine Glasübergangstemperatur Tg von $\geqq$ 140 °C, insbesondere $\geqq$ 150 °C. Die Glastemperatur soll dabei gemessen werden mit der DSC-Methode, wie sie beschrieben ist von K.H. Illers und anderen in Makromolekulare Chemie, Band 127 (1969), Seiten 1 ff. Die vollaromatischen flüssigkristallinen Polyesterimide bilden bei einer Temperatur < 320 °C, eine flüssigkristalline fadenbildende Schmelze. Bevorzugt sind auch flüssigkristalline aromatische Polyesterimide, die bei einer Temperatur >200 °C und <300 °C Teilkristallinität aufweisen.

Die erfindungsgemäßen flüssigkristallinen Polyesterimide lassen sich erhalten analog den Arbeitsweisen wie sie beispielsweise in den US-PSen 4 375 530 und 4 118 372 beschrieben werden.

Nach einer vorteilhaften Arbeitsweise erhält man die erfindungsgemäßen Polyesterimide in einem Einstufenverfahren bei dem man die nicht derivatisierten Ausgangsstoffe unter Verwendung von Anhydriden niederer Fettsäuren zum Beispiel Fettsäuren mit 2 bis 4 Kohlenstoffatomen, insbesondere Essigsäureanhydrid, umsetzt. Gegebenenfalls können Katalysatoren wie sie beispielsweise in der EP-A 131 846 beschrieben sind in Mengen von 0.001 bis 1 Gew.%, bezogen auf die Ausgangsstcffe mitverwendet werden. Die Ausgangsstoffe werden zusammen mit Fettsäureanhydrid vorteilhaft in einen mindestens 5 % igen molaren Überschuß bezogen auf die vorhandenen Hydroxygruppen unter Inertgasatmosphäre und Rühren auf eine Temperatur erhitzt, bei der Rückfluß zu beobachten ist. Vorteilhaft wird die Temperatur stufenweise gesteigert, z.B. höchstens 5 Stunden vorzugsweise bis zu 2 Stunden auf 150 bis 200 °C, anschließend wird die Temperatur z.B. innerhalb von 2 - 2,5 Stunden auf 250 - 350 °C gesteigert. Hierbei werden überschüssige Fettsäureanhydride und Fettsäuren abdestilliert. Um die Reaktion zu vervollständigen, hat es sich als vorteilhaft erwiesen gegen Ende verminderten Druck, z.B. 20 000 bis 50 Pa anzuwenden.

Bemerkenswert und nicht vorherzusehen bei der Anwendung dieses Einstufenverfahrens ist zunächst die problemlose und vollständige Reaktion ohne Katalysatorzusatz zu den gewünschten Polymeren in einer relativ kurzen Zeit. Dies ist umso bemerkenswerter als durch die Vielzahl chemisch unterschiedlicher Hydroxygruppen eine Abstufung der Reaktivitäten und damit ein mangelhafter polymerer Aufbau zu erwarten wäre.

Die so erhaltenen vollaromatischen flüssigkristallinen Polyesterimide können nach der Kondensation in der Schmelze in festem Zustand, z.B. bei Temperaturen von 150 bis 250 °c bis zur gewünschten Viskosität weiter kondensiert werden. Diese Nachkondensation in fester Phase kann sowohl vor als auch nach einer thermoplastischen Verarbeitung erfolgen. Vorteilhaft wird die Festphasenkondensation unter Mitverwendung von Inertgasen wie Stickstoff durchgeführt.

Die Polyesterimide gemäß der Erfindung können übliche Zusatzstoffe in wirksamen Mengen enthalten. Geeignete Zusatzstoffe sind Stabilisatoren und Oxidationsverzögerer, Mittel gegen Wärmezersetzung und Zersetzung durch ultraviolettes Licht, Gleit- und Entformungsmittel, Färbemittel wie Farbstoffe und Pigmente, ferner faser- oder pulverförmige Füll- und Verstärkungsmittel, Keimbildungsmittel oder Weichmacher.

Die Stabilisatoren können den Polymeren in jedem Stadium der Herstellung oder den fertigen Polymeren zugesetzt werden. Vorzugsweise werden die. Stabilisatoren zu einem frühen Zeitpunkt zugesetzt um zu verhindern, daß die Zersetzung bereits beginnt bevor die Polymeren geschützt werden können.

Geeignete Oxidationsverzögerer und Wärmestabilisatoren sind beispielsweise Halogenide von Metallen der Gruppe I des Periodischen Systems z.B. Natrium, Kalium oder Lithiumhalogenide mit Kupfer-I-halogeniden, z.B. Chloriden, Bromiden oder Jodiden, ferner sterisch gehinderte Phenole, Hydrochinone, verschiedene substituierte Vertreter dieser Gruppen und Kombinationen derselben. In der Regel setzt man solche Oxidationsverzögerer und Wärmestabilisatoren in Mengen bis zu 1 Gew.-% auf das Gewicht des Polymeren, zu.

Geeignete UV-Stabilisatoren sind beispielsweise verschiedene substituierte Resorcine, Salicylate, Benzotriazole, Benzophenone. Solche UV-Stabilisatoren werden im allgemeinen in Mengen bis zu 2 Gew.-%, bezogen auf das Polymere, angewandt.

Ferner können zugesetzt werden organische Farbstoffe wie Nigrosin sowie Pigmente z.B. Titandioxid, Cadmiumsulfid, Cadmiumsulfid-selenid, Phthalocyanine, Ultramarinblau oder Ruß, z.B. in Mengen bis etwa

5 Gew.-%.

Als geeignete pulver- oder faserförmige Füllstoffe und Verstärkungsmittel seien beispielsweise genannt, Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer oder Feldspat. Verstärkungs- und Füllmittel werden im allgemeinen in Mengen bis zu 70 Gew.-% bezogen auf das Polymere angewandt.

Geeignete Keimbildungsmittel sind beispielsweise Talkum, Calciumfluorid, Natriumphenylphosphinat, Aluminiumoxid oder feinverteiltes Tetrafluorethylen.

Weichmacher, die in Mengen bis zu 20 Gew.-%, bezogen auf das Polymere angewandt werden, sind beispielsweise Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid.

Die erfindungsgemäßen vollaromatischen flüssigkristallinen Polyesterimide eignen sich zur Herstellung von Fäden, Fasern, Folien, Schäumen und technischen Formteilen durch Spritzguß, Pressen oder Extrusion.

Die aus den erfindungsgemäßen Polyesterimiden hergestellten Formteile zeichnen sich durch hervorragende mechanische Eigenschaften wie Steifigkeit, Festigkeit und Zähigkeit aus. Sie sind außerordentlich chemikalienresistent und flammwidrig. Zudem besitzen sie eine hohe Wärmeformbeständigkeit und eine glatte, abriebfeste Oberfläche. Die erfindungsgemäßen Polyesterimide eignen sich daher hervorragend zur Herstellung von Artikeln für die Elektro- und Datentechnik, den Fahrzeugbau und andere technische Bereiche. Sie können aber auch als Überzugs- und Beschichtungsmassen (pulverförmig) dispergiert oder als Film angewandt werden.

Die Erfindung sei an folgenden Beispielen veranschaulicht.

Beispiel 1

0,08 Mol Terephthalsäure, 0,208 Mol 4-Hydroxybenzoesäure, 0,056-Mol Hydrochinon, 0,032 Mol Dihydroxybiphenyl, 0,072 Mol t-Butylhydrochinon und 0,08 Mol der Verbindung

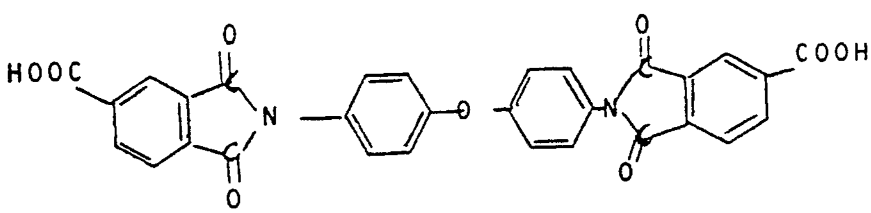

und 126 ml Acetanhydrid werden unter Stickstoffatmopshäre und Rühren innerhalb von 2 h 450 min von 150° C auf 300° C erhitzt. Dabei wird überschüssiges Acetanhydrid und Essigsäure abdestilliert. Anschließend wird innerhalb von 40 min der Druck auf 80 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 156° C. Die inhärente Viskosität beträgt 1,21 dl/g gemessen in 0,1 %iger (Gew.-Vol.) Lösung in Pentafluorphenol bei 60° C.

Beispiel 2

0,08 Mol Terephthalsäure, 0,208 Mol 4-Hydroxybenzoesäure, 0,08 Mol Hydrochinon, 0,08 Mol t-Butylhydrochinon und 0,08 Mol der Verbindung

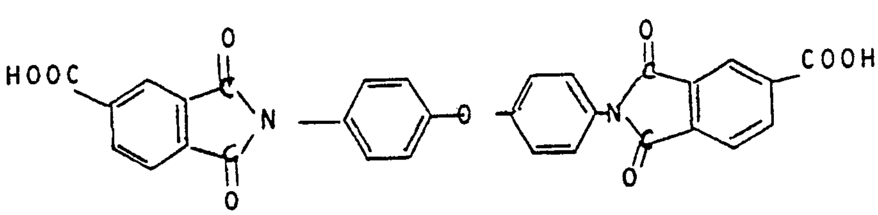

und 126 ml Acetanhydrid werden unter Stickstoffatmosphäre und Rühren innerhalb von 2 h 50 min von

150° C auf 300° C erhitzt. Dabei wird überschüssiges Acetanhydrid und Essigsäure abdestilliert. Anschließend wird innerhalb 20 min der Druck auf 70 mbar reduziert. Man erhält eine viskose fadenbildende Schmelze. Die Polymerschmelze und das erkaltete Polymer zeigen einen perlmuttartigen Glanz. Das Polymer besitzt eine glatte, harte und abriebfeste Oberfläche. Aus DSC-Messungen ergibt sich eine Glastemperatur von 159° C. Die inhärente Viskosität beträgt 0,93 dl/g, gemessen in 0,1 %iger (Gew. Vol.) Lösung in Pentafluorphenol bei 60° C.

## Ansprüche

1. Vollaromatische mesomorphe Polyesterimide, die unterhalb 320° C eine flüssigkristalline fadenbildende Schmelze bilden, aufgebaut aus

a) 5 bis 35 Mol-% wiederkehrenden Einheiten der Formel I und/oder II

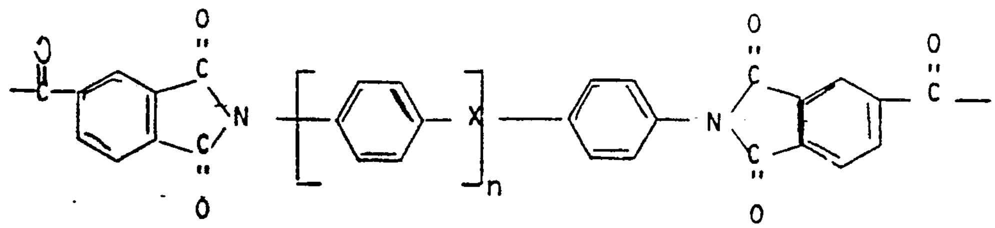

I

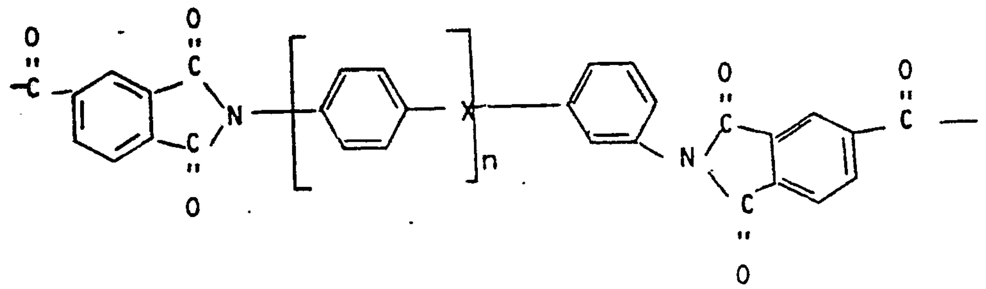

II,

in denen X gleich oder verschieden sein können und jeweils -O-, -S-, $-SO_2-$, -CO-, $-CH_2-$, $=C(CH_3)_2$ bedeutet und n für 0 oder 1 steht,

b) 0 bis 30 Mol-% wiederkehrenden Einheiten der Formeln III und/oder IV

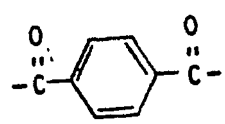

III

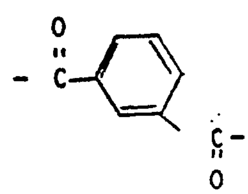

IV

c) einer der Summe der Komponenten a) und b) entsprechenden molaren Menge an wiederkehrenden Einheiten

c1) 3 bis 35 Mol-% Einheiten der Formel V

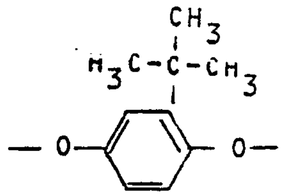

V

sowie mindestens eine der wiederkehrenden Einheiten
c2) 2 bis 25 Mol-% der Einheiten Formel VI

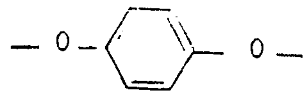

c3) O bis 25 Mol-% Einheiten der Formel VII

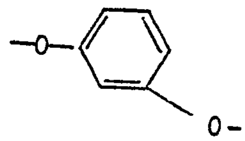

c4) 2 bis 25 Mol-% Einheiten der Formel VIII

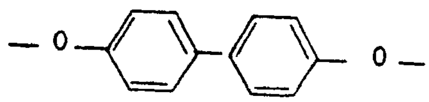

wobei die Summe der molaren Anteile der Komponenten c1) bis c4) jeweils der Summe der Mol-% der Komponenten a) und b) entspricht,
d) gegebenenfalls 5 bis 25 Mol-% wiederkehrenden Einheiten der Formel IX

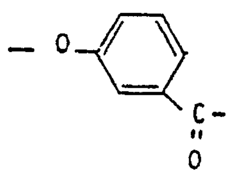

sowie
e) wiederkehrenden Einheiten der Formel X

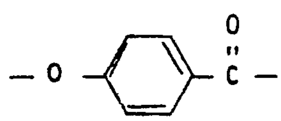

wobei die Summe der molaren Anteile der Komponenten a), b), c), d) und e) jeweils 100 Mol-% ergibt.

**2.** Vollaromatische mesomorphe Polyesterimide nach Anspruch 1, dadurch gekennzeichnet , daß sie 7 bis 25 Mol-% wiederkehrende Einheiten der Formeln I und/oder II, O bis 2O Mol-% wiederkehrende Einheiten der Formlen III und/oder IV, ggf. 5 bis 2O Mol-% wiederkehrende Einheiten der Formel IX enthalten.

**3.** Vollaromatische mesomorphe Polyesterimide nach den Ansprüchen 1 und 2, dadurch gekennzeichnet ,

daß sie als Komponente C 5 bis 25 Mol-% wiederkehrende Einheiten der Formel V enthalten und zudem mindestens eine der Einheiten 5 bis 20 Mol-% der Formel VI, 5 bis 20 Mol-% der Formel VII und 5 bis 20 Mol-% der Formel VIII.

4. Vollaromatische mesomorphe Polyesterimide nach den Ansprüchen 1 und 2, dadurch gekennzeichnet, daß sie als Komponente C 10 bis 20 Mol-% wiederkehrende Einheiten der Formel V sowie 8 bis 18 Mol-% wiederkehrende Einheiten der Formel VI und/oder 5 bis 16 Mol-% wiederkehrende Einheiten der Formel VIII enthalten.

5. Vollaromatische mesomorphe Polyesterimide nach den Ansprüchen 1 bis 4, dadurch gekennzeichnet, daß sie eine Glasübergangstemperatur Tg 140° C haben.

6. Verfahren zur Herstellung von vollaromatischen mesopmorphen Polyesterimiden nach den Ansprüchen 1 bis 5, dadurch gekennzeichnet, daß man die Monomeren in Form der underivatisierten Hydroxy- bzw. Carboxyverbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach Anspruch 8, dadurch gekennzeichnet, daß man die vollaromatischen Polyesterimide nach der Kondensation in der Schmelze in fester Phase bei einer Temperatur von 150 bis 250° C nachkondensiert.

8. Verwendung von vollaromatischen mesomorphen Polyesterimiden nach den Ansprüchen 1 bis 7 zur Herstellung von Fäden, Fasern, Folien und Formteilen.

Patentansprüche für folgenden Vertragsstaat: AT

1. Verfahren zur Herstellung von vollaromatischen mesomorphen Polyesterimiden, die unterhalb 320° C eine flüssigkristalline fadenbildende Schmelze bilden, aufgebaut aus

a) 5 bis 35 Mol-% wiederkehrenden Einheiten der Formel I und/oder II

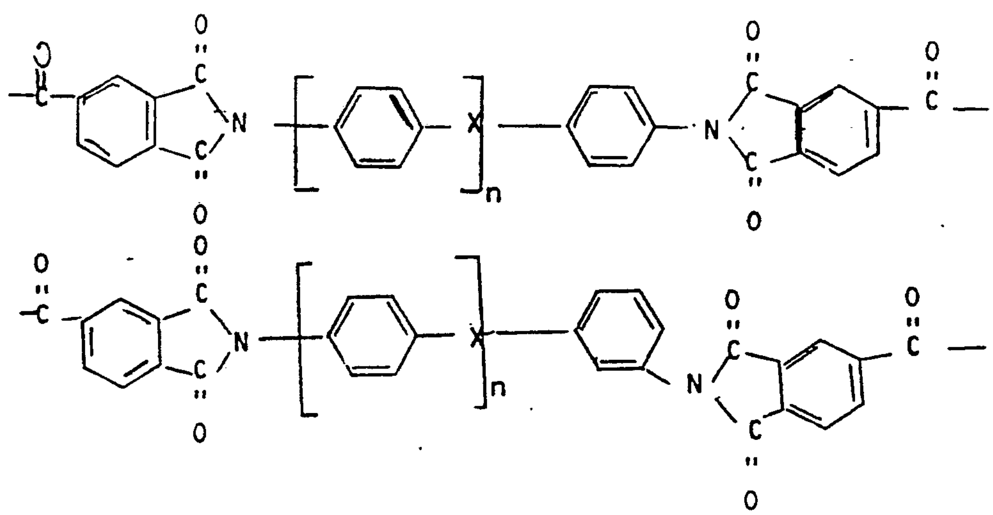

I

II,

in denen X gleich oder verschieden sein können und jeweils -O-, -S-, $-SO_2-$, -CO-, $-CH_2-$, $=C(CH_3)_2$ bedeutet und n für O oder 1 steht,

b) O bis 30 Mol-% wiederkehrenden Einheiten der Formeln III und/oder IV

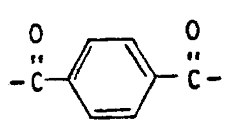

III

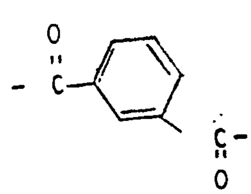

IV

c) einer der Summe der Komponenten a) und b) entsprechenden molaren Menge an wiederkehrenden Einheiten
c1) 3 bis 35 Mol-% Einheiten der Formel V

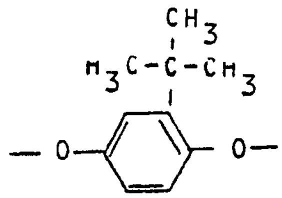

V

sowie mindestens eine der wiederkehrenden Einheiten
c2) 2 bis 25 Mol-% der Einheiten Formel VI

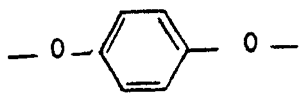

c3) O bis 25 Mol-% Einheiten der Formel VII

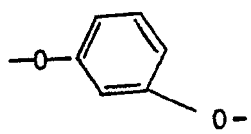

c4) 2 bis 25 Mol-% Einheiten der Formel VIII

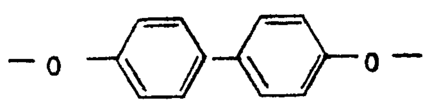

wobei die Summe der molaren Anteile der Komponenten c1) bis c4) jeweils der Summe der Mol-% der Komponenten a) und b) entspricht,
d) gegebenenfalls 5 bis 25 Mol-% wiederkehrenden Einheiten der Formel IX

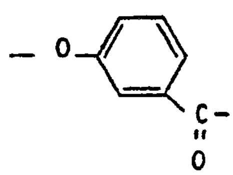

sowie
e) wiederkehrenden Einheiten der Formel X

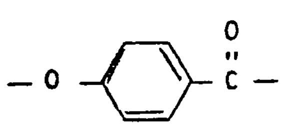

wobei die Summe der molaren Anteile der Komponenten a), b), c), d) und e) jeweils 100 Mol-% ergibt durch Umsetzen der den Einheiten I bis X entsprechenden Hydroxy- und Carboxyverbindungen oder deren Ester bildenden Derivate.

**2.** Verfahren nach Anspruch 1, dadurch gekennzeichnet , daß die vollaromatischen mesomorphen Polyesterimide 7 bis 25 Mol-% wiederkehrende Einheiten der Formeln I und/oder II, O bis 2O Mol-% wiederkehrende Einheiten der Formlen III und/oder IV, ggf. 5 bis 2O Mol-% wiederkehrende Einheiten der Formel IX enthalten.

3. Verfahren nach den Ansprüchen 1 und 2, dadurch gekennzeichnet , daß die vollaromatischen mesomorphen Polyesterimide als Komponente C 5 bis 25 Mol-% wiederkehrende Einheiten der Formel V enthalten und zudem mindestens eine der Einheiten 5 bis 2O Mol-% der Formel VI, 5 bis 2O Mol-% der Formel VII und 5 bis 2O Mol-% der Formel VIII.

4. Verfahren nach den Ansprüchen 1 und 2, dadurch gekennzeichnet , daß die vollaromatischen mesomorphen Polyesterimide als Komponente C 1O bis 2O Mol-% wiederkehrende Einheiten der Formel V sowie 8 bis 18 Mol-% wiederkehrende Einheiten der Formel VI und/oder 5 bis 16 Mol-% wiederkehrende Einheiten der Formel VIII enthalten.

5. Verfahren nach den Ansprüchen 1 bis 4, dadurch gekennzeichnet , daß die vollaromatische mesomorphe Polyesterimide eine Glasübergangstemperatur Tg 14O° C haben.

6. Verfahren nach den Ansprüchen 1 bis 5, dadurch gekennzeichnet , daß man die Monomeren in Form der underivatisierten Hydroxy- bzw. Carboxyverbindungen in einem Einstufenverfahren und in den beschriebenen molaren Verhältnissen unter Zusatz von überschüssigem Fettsäureanhydrid bei erhöhter Temperatur umsetzt und Fettsäureanhydrid und Fettsäure aus dem Reaktionsgemisch abdestilliert.

7. Verfahren nach den Ansprüchen 1 bis 8, dadurch gekennzeichnet , daß man die vollaromatischen Polyesterimide nach der Kondensation in der Schmelze in fester Phase bei einer Temperatur von 15O bis 25O° C nachkondensiert.

8. Verwendung von vollaromatischen mesomorphen Polyesterimiden nach den Ansprüchen 1 bis 7 zur Herstellung von Fäden, Fasern, Folien und Formteilen.

## Claims

1. A wholly aromatic mesomorphic polyester imide which forms a liquid-crystalline fiber-forming melt below 320° C, composed of
   a) from 5 to 35 mol% of repeat units of the formulae I and/or II

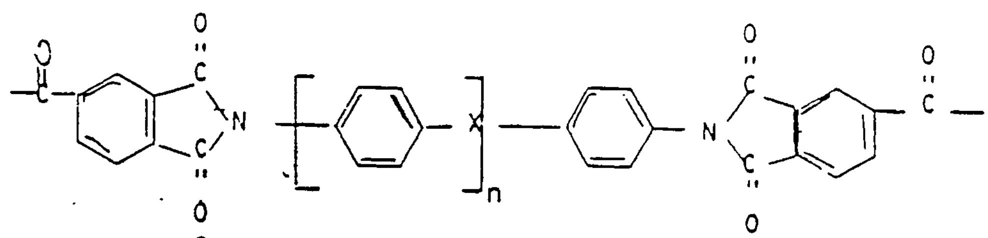

I

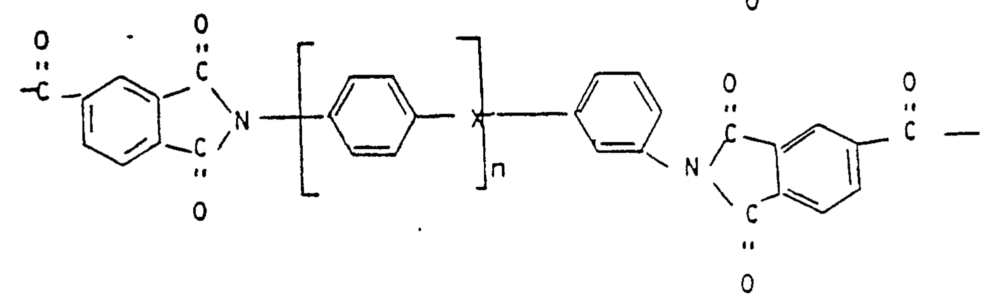

II,

where x can be identical or different and each is -0-, -S-, $-SO_2-$ -CO-, $-CH_2-$ or = $C(CH_3)_2$, and n is 0 or 1,
b) from 0 to 30 mol% of repeat units of the formulae III and/or IV

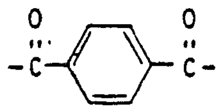

III

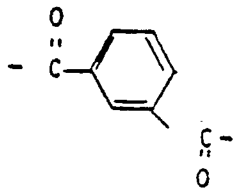

IV

c) a molar amount ccrresponding to the total amount of a) and b) of repeat units

c1) from 3 to 35 mol% of units of the formula V

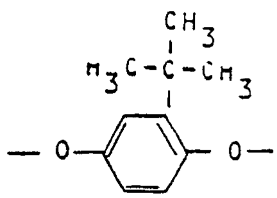

V

and one or more of the repeat units

c2) from 2 to 25 mol% of units of the formula VI

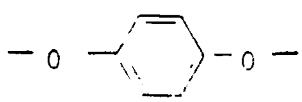

c3) from 5 to 25 mol% of units of the formula VII

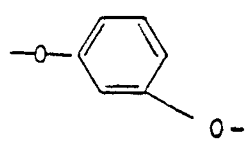

c4) from 2 to 25 mol% of units of the formula VIII

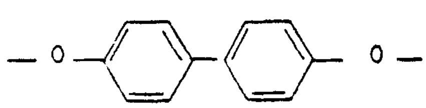

the total of the molar proportions of components c1), c2), c3) and c4) corresponding in each case to the total in mol% of components a) and b),

d) if desired from 5 to 25 mol% of repeat units of the formula IX

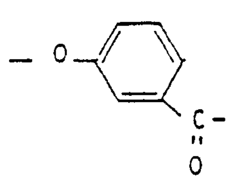

e) repeat units of the formula x

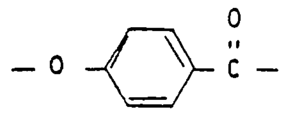

the molar proportions of components a), b), c), d) and e) in each case adding up to 100 mol%.

**2.** A wholly aromatic mesomorphic polyester imide as claimed in claim 1, which contains from 7 to 25 mol% of repeat units of the formulae I and/or II, from 0 to 20 mol% of repeat units of the formulae III and/or IV, with or without from 5 to 20 mol% of repeat units of the formula IX.

**3.** A wholly aromatic mesomorphic polyester imide as claimed in claim 1 or 2, which contains as component C from 5 to 25 mol% of repeat units of the formula V and, in addition, one or more of the units from 5 to 20 mol% of the formula VI, from 5 to 20 mol% of the formula VII and from 5 to 20 mol% of the formula VIII.

**4.** A wholly aromatic mesomorphic polyester imide as claimed in claim 1 or 2, which contains as component C from 10 to 20 mol% of repeat units of the formula V and from 8 to 18 mol% of repeat units of the formula VI and/or from 5 to 16 mol% of repeat units of the formula VIII.

**5.** A wholly aromatic mesomorphic polyester imide as claimed in claim 1 or 2 or 3 or 4, which has a glass transition temperature Tg $\geq$ 140 °C.

**6.** A process for preparing a wholly aromatic mesomorphic polyester imide as claimed in claim 1 or 2 or 3 or 4 or 5 by reacting the monomers in the form of the underivatized hydroxy and carboxy compounds in a single-stage process and in the described molar ratios with the addition of excess fatty acid anhydride at elevated temperature and distilling fatty acid anhydride and fatty acid out of the reaction mixture.

**7.** A process as claimed in claim 8, wherein after the condensation in the melt the wholly aromatic polyester imide is further condensed in solid phase at 150 - 250 °C.

**8.** The use of a wholly aromatic mesomorphic polyester imide as claimed in claim 1 or 2 or 3 or 4 or 5 or prepared as claimed in claim 6 or 7 for the production of yarns, fibers, films or moldings.

Claims for the following Contracting State: AT

**1.** A process for preparing a wholly aromatic mesomorphic polyester imide which forms a liquid-crystalline fiber-forming melt below 320 °C, composed of

a) from 5 to 35 mol% of repeat units of the formulae I and/or II

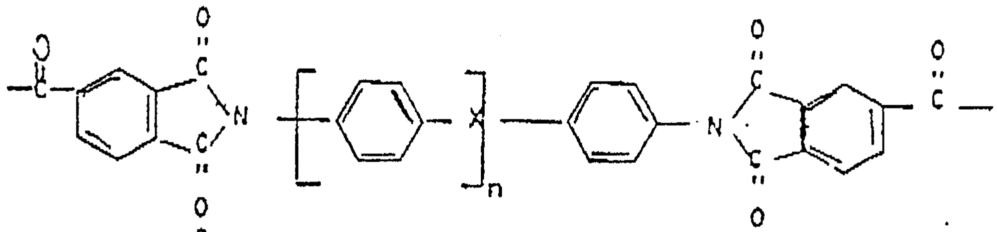 I

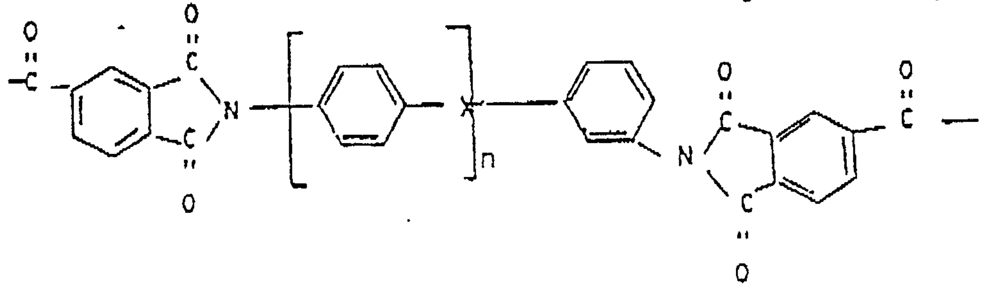 II,

where X can be identical or different and each is -0-, -S-, $-SO_2-$, -CO-, $-CH_2-$ or $=C(CH_3)_2$, and n is 0 or 1,

b) from 0 to 30 mol% of repeat units of the formulae III and/or IV

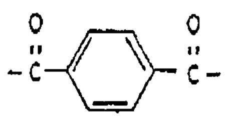 III

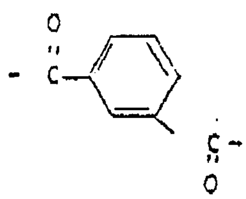 IV

c) a molar amount corresponding to the total amount of a) and b) of repeat units

c1) from 3 to 35 mol% of units of the formula v

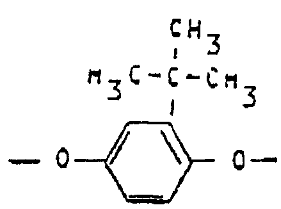 V

and one or more of the repeat units

c2) from 2 to 25 mol% of units of the formula VI

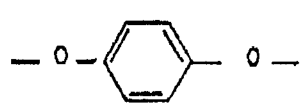

c3) from 5 to 25 mol% of units of the formula VII

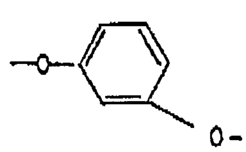

c4) from 2 to 25 mol% of units of the formula VIII

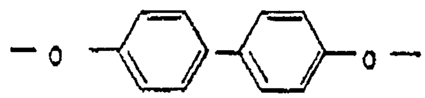

the total of the molar proportions of components c1), c2), c3) and c4) corresponding in each case to the total in mol% of components a) and b),
d) if desired from 5 to 25 mol% of repeat units of the formula IX

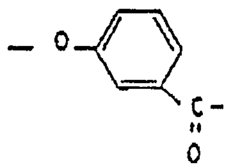

and
e) repeat units of the formula X

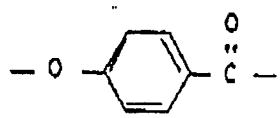

the molar proportions of components a), b), c), d) and e) in each case adding up to 100 mol% by reaction of a hydroxy or carboxy compound corresponding ti one of the units I to X or of an ester-forming derivative thereof.

2. A process as claimed in claim 1, wherein the wholly aromatic mesomorphic polyester imide contains from 7 to 25 mol% of repeat units of the formulae I and/or II, from 0 to 20 mol% of repeat units of the formulae III and/or IV, with or without from 5 to 20 mol% of repeat units of the formula IX.

3. A process as claimed in either of claims 1 and 2, wherein the wholly aromatic mesomorphic polyester imide contains as component C from 5 to 25 mol% of repeat units of the formula V and, in addition, one or more of the units from 5 to 20 mol% of the formula VI, from 5 to 20 mol% of the formula VII and from 5 to 20 mol% of the formula VIII.

4. A process as claimed in either of claims 1 and 2 contains as component C from 10 to 20 mol% of repeat units of the formula V and from 8 to 18 mol% of repeat units of the formula VI and/or from 5 to 16 mol% of repeat units of the formula VIII.

5. A process as claimed in any one of claims 1 to 4 wherein the wholly aromatic mesomorphic polyester imide has a glass transition temperature Tg $\geq$ 140 °C.

6. A process as claimed in any one of claims 1 to 4 which comprises reacting the monomers in the form of the underivatized hydroxy and carboxy compounds in a single-stage process and in the described molar ratios with the addition of excess fatty acid anhydride at elevated temperature and distilling fatty acid anhydride and fatty acid out of the reaction mixture.

7. A process as claimed in any one of claims 1 to 8, wherein after the condensation in the melt the wholly aromatic polyester imide is further condensed in solid phase at 150 - 250 °C.

8. The use of a wholly aromatic mesomorphic polyester imide as claimed in any one of claims 1 to 7 for the production of yarns, fibers, films or moldings.

**Revendications**

1. Polyesterimides mésomorphes, totalement aromatiques, qui forment, en-dessous de 320 °C, des masses fondues formatrices de fils, liquides-cristallines, qui se composent de

a) 5 à 35% molaires d'unités récurrentes des formules I et/ou II

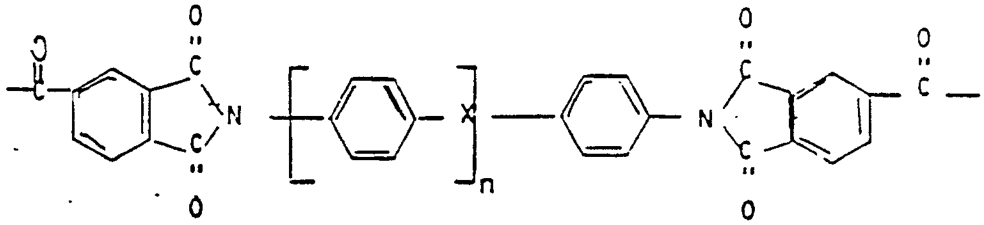

I

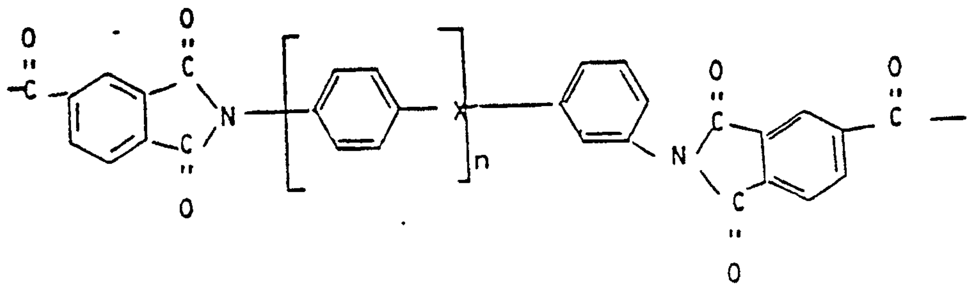

II,

dans lesquelles les symboles X peuvent avoir des significations identiques ou différentes et représentent chacun -0-, -S-, $-SO_2-$, -C0-, $-CH_2-$, $=C(CH_3)_2$ et n est égal à 0 ou à 1

b) 0 à 30% molaires d'unités récurrentes des formules III et/ou IV

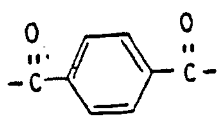

III

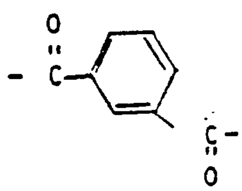

IV

une proportion molaire d'unités récurrentes correspondant à la somme des composants a) et b)

c1) 3 à 35% molaires d'unités de la formule V

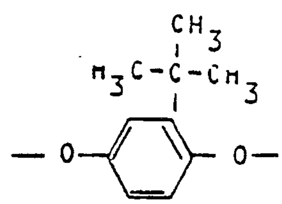

V

comme aussi au moins l'une des unités récurrentes des formules VI, VII et VIII

c2) 2 à 25% molaires des unités de la formule VI

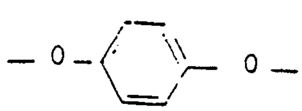

c3) 5 à 25% molaires d'unités de la formule VII

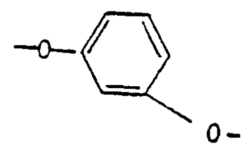

c4) 2 à 25% molaires d'unités de la formule VIII

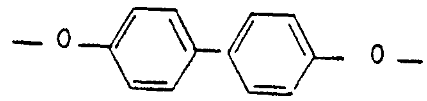

où la somme des proportions molaires des composants c1) à c4) correspond à chaque fois à la somme des pourcentages molaires des composants a) et b),

d) éventuellement 5 à 25% molaires d'unités récurrentes de la formule IX

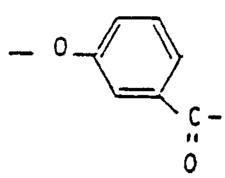

comme aussi

e) d'unités récurrentes des la formule X

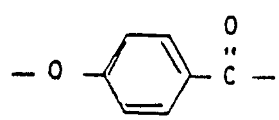

où la somme des proportions molaires des composants a), b), c), d) et e) atteint à chaque fois 100% molaires,

**2.** Polyesterimides mésomorphes, totalement aromatiques, suivant la revendication 1, caractérisés en ce qu'ils contiennent de 7 à 25% molaires d'unités récurrentes des formules I et/ou II, de 0 à 20% molaires d'unités récurrentes des formules III et/ou IV, éventuellement de 5 à 20% molaires d'unités récurrentes de la formule IX.

**3.** Polyesterimides mésomorphes, totalement aromatiques, suivant les revendications 1 et 2, caractérisés en ce qu'ils contiennent, à titre de composant C, de 5 à 25% molaires d'unités récurrentes de la formule V et, en outre, au moins l'une des unités de la formule VI à raison de 5 à 20% molaires, de la formule VII à raison de 5 à 20% molaires et de la formule VIII à raison de 5 à 20% molaires.

**4.** Polyesterimides mésomorphes, totalement aromatiques, suivant les revendications 1 et 2, caractérisés en ce qu'ils contiennent, à titre de composant C, 10 à 20% molaires d'unités récurrentes de la formule V, comme aussi 8 à 18% molaires d'unités récurrentes de la formule V comme aussi 8 à 18% molaires d'unités récurrentes de la formule VI et/ou 5 à 16% molaires d'unités récurrentes de la formule VIII.

**5.** Polyesterimides mésomorphes, totalement aromatiques, suivant les revendications 1 à 4, caractérisés en ce qu'ils possèdent une température de transition vitreuse Tg de 140 °C.

**6.** Procédé de préparation de polyesterimides mésomorphes, totalement aromatiques, suivant les revendications 1 à 5, caractérisé en ce que l'on fait réagir les monomères sous la forme des dérivés

hydroxylés ou carboxylés non transformés en dérivés, selon un procédé en une étape et dans les proportions molaires décrites, sous addition d'un anhydride d'acide gras excédentaire, à température élevée et on chasse par distillation l'anhydride d'acide gras et l'acide gras du mélange réactionnel.

**7.** Procédé suivant la revendication 8, caractérisé en ce que l'on poursuit la condensation des polyesterimides totalement aromatiques après la condensation à l'état fondu, en phase solide, à une température de 150 à 250° C.

**8.** Utilisation de polyesterimides mésomorphes, totalement aromatiques, selon les revendications 1 à 7, pour la fabrication de fils, fibres, feuilles et articles moulés.

Revendications pour l'Etat contractant suivant: AT

**1.** Procédé de fabrication de polyesterimides mésomorphes, totalement aromatiques, qui forment, en-dessous de 320° C, des masses fondues formatrices de fils, liquides-cristallines, qui se composent de

a) 5 à 35% molaires d'unités récurrentes des formules I et/ou II

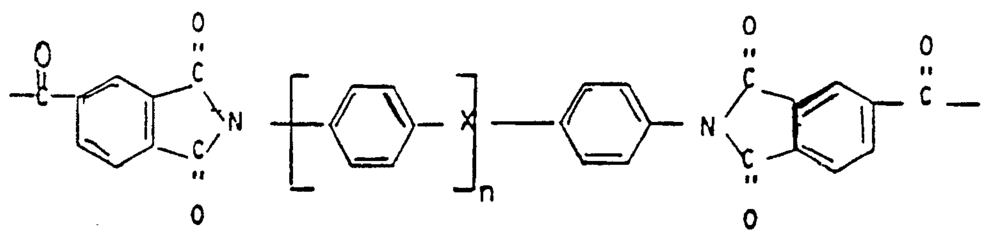

I

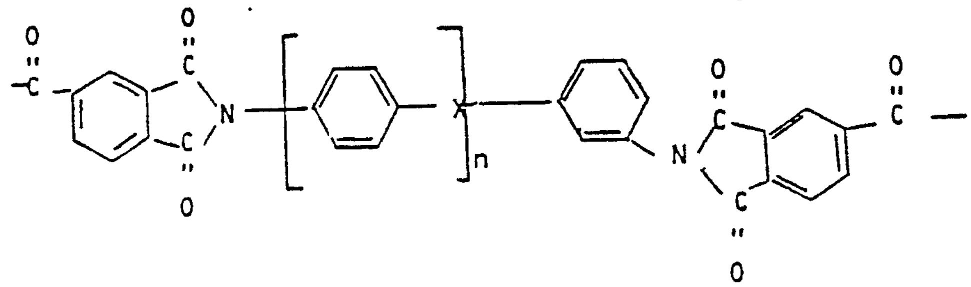

II,

dans lesquelles les symboles X peuvent avoir des significations identiques ou différentes et représentent chacun -0-, -S-, $-SO_2-$, -C0-, $-CH_2-$, $=C(CH_3)_2$ et n est égal à 0 ou à 1,

b) 0 à 30% molaires d'unités récurrentes des formules III et/ou IV

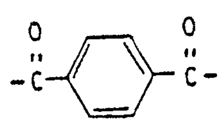

III

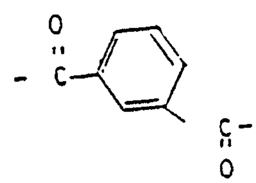

IV

c) une proportion molaire d'unités récurrentes correspondant à la somme des composants a) et b)

c1) 3 à 35% molaires d'unités de la formule V

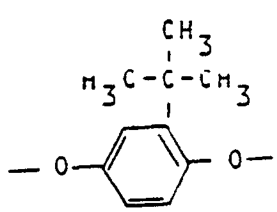

V

comme aussi au moins l'une des unités récurrentes des formules VI, VII et VIII

c2) 2 à 25% molaires des unités de la formule VI

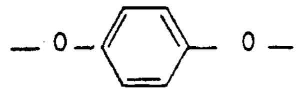

c3) 5 à 25% molaires d'unités de la formule VII

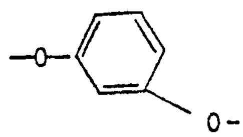

c4) 2 à 25% molaires d'unités de la formule VIII

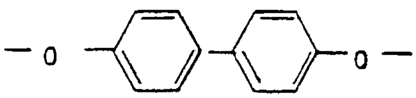

où la somme des proportions molaires des composants c1) à c4) correspond à chaque fois à la somme des pourcentages molaires des composants a) et b),
d) éventuellement 5 à 25% molaires d'unités récurrentes de la formule IX

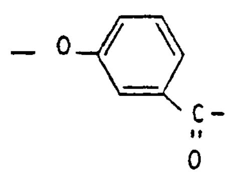

comme aussi
e) d'unités récurrentes de la formule X

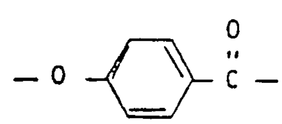

où la somme des proportions molaires des composants a), b), c), d) et e) atteint à chaque fois 100% molaires, par conversion ou réaction des composés hydroxylés et carboxylés correspondant aux unités I à X, ou de leurs dérivés estérogènes.

2. Procédé suivant la revendication 1, caractérisé en ce que les polyesterimides mésomorphes, totalement aromatiques, contiennent de 7 à 25% molaires d'unités récurrentes des formules I et/ou II, de 0 à 20% molaires d'unités récurrentes des formules III et/ou IV, éventuellement de 5 à 20% molaires d'unités récurrentes de la formule IX.

3. Procédé suivant les revendications 1 et 2, caractérisé en ce que les polyesterimides mésomorphes, totalement aromatiques, contiennent, à titre de composant C, de 5 à 25% molaires d'unités récurrentes de la formule V et, en outre, au moins l'une des unités de la formule VI à raison de 5 à 20% molaires, de la formule VII à raison de 5 à 20% molaires et de la formule VIII à raison de 5 à 20% molaires.

4. Procédé suivant les revendications 1 et 2, caractérisé en ce que les polyesterimides mésomorphes, totalement aromatiques, contiennent, à titre de composant C, 10 à 20% molaires d'unités récurrentes

de la formule V, comme aussi 8 à 18% molaires d'unités récurrentes de la formule VI et/ou 5 à 16% molaires d'unités récurrentes de la formule VIII.

**5.** Procédé suivant les revendications 1 à 4, caractérisé en ce que les polyesterimides mésomorphes, totalement aromatiques, possèdent une température de transition vitreuse Tg de 140°C.

**6.** Procédé suivant les revendications 1 à 4, caractérisé en ce que l'on fait réagir les monomères sous la forme des dérivés hydroxylés ou carboxylés non transformés en dérivés, selon un procédé en une étape et dans les proportions molaires décrites, sous addition d'un anhydride d'acide gras excédentaire, à température élevée et on chasse par distillation l'anhydride d'acide gras et l'acide gras du mélange réactionnel.

**7.** Procédé suivant les revendications 1 à 8, caractérisé en ce que l'on poursuit la condensation des polyesterimides totalement aromatiques après la condensation à l'état fondu, en phase solide , à une température de 150 à 250°C.

**8.** Utilisation de polyesterimides mésomorphes, totalement aromatiques, selon les revendications 1 à 7, pour la fabrication de fils, fibres, feuilles et articles moulés.